# EUROPEAN PATENT SPECIFICATION

(11) **EP 0 713 429 B1**
(45) Date of publication and mention of the grant of the patent: **16.12.1998**
(21) Application number: 94926124.2
(22) Date of filing: 28.07.1994
(51) Int. Cl.: B05D 7/24, C08J 7/00

(54) **HYDROPHILIC FILMS BY PLASMA POLYMERISATION**
HYDROPHILE FILME DURCH PLASMAPOLYMERISATION
COUCHES HYDROPHILES OBTENUES PAR POLYMERISATION A PLASMA

(30) Priority: 09.08.1993 EP 93810564
(43) Date of publication of application: 29.05.1996
(73) Proprietor: Novartis AG, 4058 Basel (CH)
(72) Inventor: MUELLER VON DER HAEGEN, Harro, verstorben (DE); SEIFERLING, Bernhard, D-63773 Goldbach (DE); BIEDERMAN, Hynek, Prag 6 (CZ); OHLIDAL, Martin, Prag 2 (CZ); SLAVINSKA, Dana, Prag 6 (CZ); FEJFAR, Antonin, Prag 5 (CZ); VYSKOCIL, Jiri, Prag 5 (CZ); HLAVAC, Martin, Jihlava (CZ)
(86) International application number: EP9402484
(87) International publication number: WO9504609

(56) References cited:
- EP-A- 0 233 708
- US-A- 3 686 018
- US-A- 4 938 995
- PATENT ABSTRACTS OF JAPAN vol. 017, no. 017 (C-1016) 13 January 1993 & JP,A,04 243 543 (KURAKAY CHEM. CORP) 31 August 1992
- DATABASE WPI Section Ch, Week 8819, 1988 Derwent Publications Ltd., London, GB; Class A05, AN 88-129792 & JP,A,63 073 260 (MINOLTA CAMERA K.K.) 2 April 1988
- S. WU 'Polymer Interface and Adhesion' 1982 , MARCEL DEKKER , NEW-YORK US see page 298 - page 321

## Description

The present invention relates to a process for the surface modification of a polymer substrate, comprising the steps of producing a working gas comprising at least one organic compound in a plasma reactor, converting said working gas into a plasma form, and subjecting the polymer substrate to said plasma, wherein the working gas further comprises hydrogen peroxide in addition to at least one organic compound.

The surface modification of polymers has for many years been a major focus of interest. The properties of a polymer often have to fulfill different physical and chemical requirements only some of which, because of the material employed, can be achieved. One means of meeting these requirements consists in coating a base material with a thin layer of a second material. The object of this second material is to supply the missing properties of the first material, but without changing the basic properties of the base material. Special attention is directed in this connection to the enhanced wettability of polymer surfaces.

A first known method comprises modifying the surface of a polymer by subjecting said polymer to a working gas consisting of air, oxygen, nitrogen or argon under the conditions of so-called corona discharge and under normal pressure. The drawback of this method is that it produces inhomogeneous and impure surface changes.

Pioneer work in the field of the surface modification of polymers with the object of enhancing in particular the wettability of contact lenses has been carried out by Yasuda et al., J.Biomed. Mater. Res. 9, 629 (1975). The authors describe a process in which a 20 nm layer of a plasma-polymerised mixture of acetylene, water and nitrogen is deposited on a PMMA contact lens. The plasma is produced in an apparatus for downstream coating with a high frequency glow discharge and a working frequency of 13.56 MHz. The contact angle of a normal untreated PMMA surface is about 71° using the water droplet method and, after the plasma polymerisation coating just described, decreases to about 37°

Yasuda et al., J.Biomed. Mater. Res. 22, 919 (1988), have recently described a process in which a silicone contact lens is coated with an ultra-thin 5 nm layer by plasma polymerisation in methane. The plasma used for the coating is likewise produced with a high-frequency glow discharge at 13.56 MHz. The contact angle of an uncoated contact lens is about 82° and that of one coated as just described is about 78°. The coated lenses are aftertreated in three different ways:
a) wet air is introduced into the coating apparatus,
b) wet oxygen plasma (12 W, 10 cm³STP/min.) is produced for a period of 2 minutes
c) wet oxygen is introduced into the apparatus.

The contact angle after the additional treatment is 63° for a), 21° for b) and 60° for c). The aftertreatment of method b) gives the highest O₁ₛ/C₁ₛ ratio as measured by ESCA (Electron Spectroscopy for Chemical Application). The oxygen permeability is comparable in all three cases, but the sliding angle (static coefficient of friction) is lowest in method c).

An attractive method of depositing thin hydrophilic layers on substrates comprises the use of unsaturated alcohols in plasma polymerisation. Hozumi et al. , Pure & Appl. Chem 60, 697 (1988), describe a high-frequency glow discharge method in which they use allyl alcohol and propargyl alcohol as well as 2-methyl-3-butin-2-ol. The experiments carried out in particular with propargyl alcohol show that the contact angle is 45° after deposition. If water is used in this plasma polymerisation in addition to the working gas, then the contact angle can be reduced even to 20°. But after swelling a product so coated in water it is found that this additional layer has unsatisfactory adhesion to the substrate.

Various other patents describe hydrophilic films. JP 59-15569 describes a process for glow discharge in the presence of water and an organic compound. The wettability as a function of the time is not investigated in this publication.

According to the teaching of an earlier patent specification, DE 2 748 256 (Bausch & Lomb), a hydrophilic layer of a plasma polymer is deposited on a contact lens polymer starting from poly-2-hydroxyethylmethacrylate or poly-N-vinylpyrrolidone.

In a more recent patent specification, DE 3 143 839 (Yasuda et al.), a hydrophilic film of a plasma polymer is deposited on silicone or polyurethane contact lenses using a glow discharge at a frequency of 10 kHz. In the working gas, the authors use hydrocarbons, halogenated hydrocarbons, hydrogen or perhalogenated hydrocarbons or mixtures thereof.

Two more recent publications, PCT-AU 89/00220 and H.J. Griesser, Materials Forum, 14 (1990) 192, relate to a plasma polymerisation method in which organic compounds such as saturated alcohols, saturated amines, derivatives or mixtures thereof, as well as inorganic gases such as oxygen, hydrogen, nitrogen, helium, argon or neon and water vapor are deposited as plasma polymer on a contact lens. It is disclosed in these publications that the water content should be not more than 20 % by volume and, preferably 5 % by volume. The presence of water is intended to prevent excessive crosslinking of the plasma polymer. Examples are given in which films are deposited by plasma polymerisation of ethanol and isobutanol. In the glow discharge, the substrates are subjected to power of about 1 watt/cm² when placed between the electrodes of a plan parallel system. If a sufficiently high equilibrium potential occurs on these substrates, then spontaneous discharges of high energy are released that heat the substrate to high temperature and cause internal tension, thereby giving rise to highly crosslinked and disordered plasma polymer deposits.

A further development of the process of H.J. Griesser is US 5 002 794 to Rattner et al.. This process utilises a high frequency energy source in a power range from about 3-50 watt. The novel feature of the Rattner patent is the simultaneous cooling of the substrates. The films of polyethylene glycol (PEG) so produced have predictable chemical properties as well as good wettability. Tetraethylene glycol dimethyl ether (TEGDME) is used as preferred precursor for producing plasma polymer films having a thickness of only 10-200 Angström. Further plasma polymer films are prepared from polymethacrylates. The patent is silent as to the ageing resistance and abrasion of these films. It is known that the plasma polymer films produced at low temperature undergo severe network rearrangements when subjected for a prolonged period of time to ambient temperature and/or air.

There is therefore still a need to develop a process that solves the problems outlined above of the plasma polymerisation methods of the prior art. In particular, there is a need to provide a process that ensures the formation of hydrophilic films of good wettability, i.e. low contact angles on the one hand and good abrasion resistance on the other, and good ageing resistance. The advantage of this invention resides in the feature of depositing hydrophilic films on polymer substrates so as to achieve enhanced wettability, increased abrasion resistance and good ageing resistance, while employing technical and material resources comparable to those of the prior art.

Specifically, the present invention relates to a process for depositing a hydrophilic film on a polymer substrate, comprising the steps of producing a working gas comprising at least one organic compound in a plasma reactor, converting said working gas into a plasma form, and subjecting the polymer substrate to said plasma, wherein the working gas further comprises hydrogen peroxide in addition to at least one organic compound.

A hydrophilic film produced by a plasma polymerisation is thereby obtained, i.e. a hydrophilic film of a plasma polymer is deposited on a polymer substrate. The plasma polymerisation of this invention gives a plasma polymer into whose network a plurality of evenly distributed oxygen-containing groups are incorporated, which groups, compared with the prior art, produce an abrasion-resistant and durable coating as well as an excellent surface wettability.

A working gas will be understood as meaning the composition of a gas or mixture of gases before it is converted into a plasma state.

A working gas is typically produced by volatilising a compound which has been placed in a storage vessel at room temperature and under normal pressure. A compound may be volatilised by applying a vacuum to, and thermostatically controlling, the storage vessel containing said compound. The storage vessel is usually connected to the plasma reactor, conveniently by a controllable inlet valve.

The composition of the working gas in a plasma reactor is conveniently controlled by means of separate inlet valves for each of the compounds intended for use in the working gas.

An essential feature of this invention is the use of hydrogen peroxide or, preferably, dilute aqueous hydrogen peroxide, and of an organic compound in the working gas.

The hydrogen peroxide gas present in the working gas may be produced by volatilising commercial hydrogen peroxide or a commercially available aqueous solution of hydrogen peroxide in a storage vessel that is thermostatically set to the prevailing ambient temperature in order to maintain a constant vapour pressure. The references made throughout this specification to hydrogen peroxide in the working gas will preferably be understood as meaning hydrogen peroxide gas prepared in the aforementioned described manner.

An organic compound in gaseous form may be obtained by volatilising an organic compound from a separate storage vessel which is thermostatically set to the prevailing ambient temperature in order to maintain a constant vapour pressure. The references made throughout this specification to an organic compound present in the working gas will always be understood as meaning an organic compound in gaseous form.

The percentages given in connection with the use of hydrogen peroxide throughout this specification are always the percentages by weight of hydrogen peroxide in water measured at ambient temperature and normal pressure.

A plasma can be produced in per se known manner, conveniently as follows: A commercially available plasma reactor or glow discharge reactor {e.g. as defined by J. Asmussen, J. Vac. Sci. Technol. A7(3), 883(1989)} is charged with a polymer substrate. The apparatus is evacuated continuously and a working gas comprising hydrogen peroxide and an organic compound is introduced continuously via an inlet valve. The reaction chamber is then subjected to electromagnetic radiation to initiate a glow discharge that converts the gaseous compounds into a plasma state. The conversion of the working gas into the plasma form results in the formation of radicals and ionised particles that are capable of polymerisation.

A hydrophilic film produced by plasma polymerisation usually has a layer thickness in the range from 10 to 800 nm, preferably of 10 to 500 nm and, most preferably, of 50 to 250 nm.

The layer thickness of a hydrophilic film produced by plasma polymerisation is conveniently controlled by the residence time of the substrate in the plasma reactor or by the throughput in the reactor chamber. The throughput in the reactor chamber can be regulated by thermostatic control of the entire apparatus.

The hydrogen peroxide or dilute aqueous hydrogen peroxide used in the working gas is prepared preferably starting from 50 to 90 % by weight, more preferably from 60 to 80 % by weight, hydrogen peroxide.

The amount of organic compound present in the working gas is preferably in the range from 5 to 90% by weight.

The amount of hydrogen peroxide or dilute aqueous hydrogen peroxide used in the working gas is normally in the range from 10 to 95 % by weight.

An organic compound used in the working gas preferably has a vapour pressure of at least 10 Pa at 20°C. An organic compound having a vapour pressure of at least 100 Pa at 20°C is more preferred. The preferred vapour pressures of an organic compound can also be produced by raising the temperature in the entire apparatus.

Unless otherwise indicated, the temperatures are always given throughout this specification in degrees Celsius.

Suitable organic compounds are typically aliphatic, alicyclic, araliphatic hydrocarbons or oxahydrocarbons or aromatic compounds, each unsubstituted or substituted by hydroxy, amino, formyl or carboxyl, and containing up to 12 carbon atoms inclusive.

Preferred suitable organic compounds are alkanes, oxaalkanes, alkenes, oxaalkenes, alkynes, oxaalkynes, mono-, bi- or tricycloalkanes, mono-, bi- or tricyclooxaalkanes or aromatic hydrocarbons, each unsubstituted or substituted by hydroxy, amino, formyl or carboxyl, and containing up to 12 carbon atoms inclusive.

Further preferred suitable organic compounds are lower alkanes, lower oxaalkanes, lower alkenes, lower oxaalkenes, lower alkynes, lower oxaalkynes or cycloalkanes, each unsubstituted or substituted by hydroxy, amino, formyl or carboxyl, and containing 3 to 8 carbon atoms, or oxacycloalkanes which are unsubstituted or substituted by hydroxy, amino, formyl or carboxyl and contain 2 to 8 carbon atoms, or unsubstituted benzene or benzene which is substituted by hydroxy, amino, formyl, carboxyl or C₁-C₄alkyl.

The term "lower" qualifying, inter alia, lower alkane, and lower oxaalkane denotes that the compounds or radicals so defined contain up to 8 carbon atoms inclusive.

Very particularly preferred organic compounds are alkanes, alkanols or cycloalkanols, each containing up to 8 carbon atoms inclusive.

A preferred working gas is suitably one in which the hydrogen peroxide used for the production thereof has a concentration of 50 to 90 % by weight in water and the organic compound is a lower alkanol containing up to 8 carbon atoms inclusive.

A particularly preferred working gas is suitably one in which the hydrogen peroxide used to produce the working gas has a concentration of 50 to 90 % by weight and the organic compound is a lower alkane containing up to 8 carbon atoms inclusive.

Aliphatic hydrocarbons containing up to 12 carbon atoms inclusive will be understood as meaning typically alkanes, alkenes or alkynes. Typical representatives thereof are compounds such as methane, ethane, propane, or ethylene, propylene, or acetylene or 1-propyne.

A hydroxy-substituted aliphatic hydrocarbon containing up to 12 carbon atoms inclusive will be understood as meaning typically an alkanol, an alkanediol, an alkenol or alkynol. Specific examples include methanol, ethanol, butanol, or ethylene glycol, or vinyl alcohol, allyl alcohol or propargyl alcohol.

A hydroxy-substituted alicyclic hydrocarbon containing up to 12 carbon atoms inclusive will be understood as meaning typically a cycloalkanol, bicycloalkanol, tricycloalkanol or cycloalkenol. Typical representatives are compounds such as cyclopropanol, cylobutanol, or 2-hydroxynorbornane, or 2-hydroxytricyclo[2.2.1.0^{2,6}]heptane, or cylobuten-3-ol.

Aliphatic oxahydrocarbons containing up to 12 carbon atoms inclusive will be understood as meaning typically oxaalkanes, oxaalkenes or oxaalkynes. Typical representatives are compounds such as diethyl ether, dimethyl ether, or divinyl ether or methyl propargyl ether.

Alicyclic hydrocarbons containing up to 12 carbon atoms inclusive will be understood as meaning typically cycloalkanes, bicycoalkanes, tricyloalkanes, cycloalkenes or bicyloalkenes. Illustrative examples of such compounds are cyclopropane, cyclobutane or norbomane, or tricyclo[2.2.1.0^{2,6}]heptane, or cyclohexene or bicyclo[2.2.1]heptene.

Alicyclic oxahydrocarbons containing up to 12 carbon atoms inclusive will be understood as meaning typically cyclooxaalkanes, cyclooxaalkenes or bicyclooxaalkanes. Typical representatives are compounds such as tetrahydrofuran, ethylene oxide, or 3,4-dihydro-[2H]-pyran, or 7-oxanorbornane.

A hydroxy-substituted aliphatic oxahydrocarbon containing up to 12 carbon atoms inclusive will be understood as meaning typically an oxaalkanol or oxaalkanediol. Typical representatives are compounds such as hydroxyethyl methyl ether, or diethylene glycol.

A hydroxy-substituted alicyclic oxahydrocarbon containing up to 12 carbon atoms inclusive will be understood as meaning typically a cyclooxaalkanol, bicyclooxaalkanol or cyclooxaalkanediol. Illustrative examples of such compounds are 4-hydroxytetrahydropyran, or 2-hydroxy-7-oxabicyclo[2.2.1]heptane, or 3,4-dihydroxy-tetrahydropyran.

A hydroxy-substituted aromatic hydrocarbon containing up to 12 carbon atoms inclusive will be understood as meaning typically a hydroxyaryl. A typical example is phenol.

An amino-substituted aliphatic hydrocarbon containing up to 12 carbon atoms inclusive will be understood as meaning typically an alkylamine, a diaminoalkane, an aminoalkene or an aminoalkyne. Typical representatives are compounds such as methylamine or ethylene diamine, or allyl amine, or propargyl amine.

An amino-substituted alicyclic hydrocarbon containing up to 12 carbon atoms inclusive will be understood as meaning typically a cycloalkylamine, a bicycloalkylamine, or an aminocycloalkene. Typical representatives are compounds such as cyclopropylamine or norbornylamine, or 4-aminocyclohex-1-ene.

Amino-substituted aromatic hydrocarbons containing up to 12 carbon atoms inclusive will be understood as meaning typically arylamines. A typical representative is aniline.

A formyl-substituted aliphatic hydrocarbon containing up to 12 carbon atoms inclusive will be understood as meaning typically an alkanal, alkenal or alkanedial. Typical representatives are compounds such as acetaldehyde, acrolein or glyoxal.

A formyl-substituted alicyclic hydrocarbon containing up to 12 carbon atoms inclusive will be understood as meaning typically a cycloalkylcarbaldehyde or bicycloalkylcarbaldehyde. Typical representatives are compounds such as formylcyclopropane or 1-formylnorbornan.

A formyl-substituted aromatic hydrocarbon containing up to 12 carbon atoms inclusive will be understood as meaning typically an arylcarbaldehyde. A typical example is benzaldehyde.

A carboxyl-substituted aliphatic hydrocarbon containing up to 12 carbon atoms inclusive will be understood as meaning typically an alkanecarboxylic acid, an alkenecarboxylic acid or an alkynecarboxylic acid.Typical examples are acetic acid, acrylic acid or propiolic acid.

A carboxyl-substituted alicyclic hydrocarbon containing up to 12 carbon atoms inclusive will be understood as meaning typically a cycloalkanecarboxylic acid or a bicycloalkanecarboxylic acid. Typical representatives are compounds such as cyclopropanecarboxylic acid or bicyclo[1.1.1]pentane-1-carboxylic acid.

An aromatic compound containing up to 12 carbon atoms inclusive will be understood as meaning typically an aromatic hydrocarbon such as aryl or arylalkyl. Typical representatives are naphthalene, benzofuran or azulene, preferably benzene or C₁-C₄alkyl-substituted benzene such as toluene, xylene, ethylbenzene or tert-butylbenzene.

The working gas may also comprise a noble gas and/or an inorganic gas or an inorganic gas mixture, typically argon, neon, helium, oxygen, nitrogen or air. The amount of noble gas in the working gas may conveniently be in the range from 0 to 50% by volume. The amount of inorganic gas or inorganic gas mixture in the working gas may conveniently be in the range from 0 to 20% by volume.

The plasma polymerisation process is particularly suitable for coating preformed polymer substrates, products specially for ophthalmic use such as ophthalmic lenses, typically including intraocular lenses, contact lenses or eye bandages with a hydrophilic film.

Polymer substrates will therefore be understood as meaning substrates made from typical materials for ophthalmological lenses and special contact lenses. Illustrative examples of suitable polymer substrates are RGP (rigid gas permeable) lenses, e.g. Nefocon A (Ocusil), Pasifocon A (Paraperm-02), Telefocon B (SGP-II), Silafocon A (Polycon-2), Fluorsilfocon (Fluorex-400), Paflufocon A (Fluoroperm-30) or Silafocon B (Polycon-HDK). Suitable materials are also amorphous teflon substrates or contact lenses therefrom, for example those made from Teflon AF 1600 or Teflon AF 2400, the former being a copolymer of 63-73 mol % of perfluoro-2,2-dimethyl-1,3-dioxol and 37-27 mol % of tetrafluoroethylene, and the latter being a copolymer of 80-90 mol % of perfluoro-2,2-dimethyl-1,3-dioxol and 20-10 mol % of tetrafluoroethylene.

### Example 1 (Plasma polymer treatment of a Teflon AF substrate)

The coating of a Teflon AF substrate by deposition of a plasma polymer film by means of microwave discharge is carried out in a M-3017-G plasma processor supplied by Technics Plasma GmbH, Kirchheim/Munich, {multimould cavity type reactor, in accordance with the definition of J. Asmussen, q.v.J.Vac.Sci.Technol. A7(3),883 (1989)} having a c. 100 litre capacity. Microwave energy is applied through an aluminium oxide ceramics window. The coating of the substrate with a plasma polymer film is controlled by the following parameters and the composition of the working gas:

### Abbreviations & Parameters:

d = distance in cm between the surface of the Teflon AF substrates and the window of the microwave energy source,
A = percentage of the maximum microwave energy (A max = 600 W),
a = advancing angle, in degrees (air bubble method),
r = receding angle, in degrees (air bubble method),
internal pressure of reactor = 5 Pa (Baratron manometer AA 128 supplied by MKS Instruments Germany GmbH, Munich),
working gas rate of flow = 15 cm³STP/min,
coating time = 5 min.

Working gas: 70 % hydrogen peroxide and ethanol are used in the weight ratio of 1:1 for the production of the working gas.

| d[cm] | 22 | | 24.5 | | 27 | | 30 | |
|---|---|---|---|---|---|---|---|---|
| A [%] | a [°] | r [°] | a [°] | r [°] | a [°] | r [°] | a [°] | r [°] |
| 50 | 15 | 53 | | | 15 | 15 | 30 | 85 |
| 60 | 10 | 10 | 10 | 10 | 10 | 10 | 30 | 70 |
| 70 | 10 | 10 | 10 | 10 | 10 | 10 | 10 | 10 |
| 80 | 10 | 10 | 10 | 15 | 8 | 8 | 12 | 12 |
| 90 | 10 | 10 | 10 | 10 | 10 | 10 | 10 | 10 |

Example 2: The same test set-up and the same test parameters are chosen as in Example 1.

Water and ethanol are used in the weight ratio of 1:1 for the production of the working gas.

| d[cm] | 22 | | 24.5 | | 27 | | 30 | |
|---|---|---|---|---|---|---|---|---|
| A [%] | a [°] | r [°] | a [°] | r [°] | a [°] | r [°] | a [°] | r [°] |
| 40 | 15 | 15 | 45 | 75 | 15 | 15 | 35 | 85 |
| 50 | 15 | 15 | 25 | 65 | 15 | 15 | 20 | 65 |
| 60 | 25 | 50 | 20 | 60 | 20 | 60 | 15 | 15 |
| 70 | 15 | 30 | 15 | 15 | 15 | 15 | 15 | 15 |
| 80 | 20 | 60 | 15 | 15 | 15 | 15 | 15 | 15 |
| 90 | 20 | 20 | 15 | 60 | 18 | 18 | 15 | 60 |

The comparison between Example 1 and Example 2 shows clearly that, in particular as a function of the distance in Example 1, i.e. with hydrogen peroxide, the better and more homogenous contact angle values are obtained.

Example 3: A plasma polymer produced from polytetrafluoroethylene (PTFE) is deposited, in argon, from a PTFE source (planar magnetron of 7.5 cm diameter) on to a quartz crystal cut (AT) of a quartz crystal microbalance monitor (QCM) {Typ MT 01 supplied by Pleschner Elektronik Service, Prague} by means of high frequency sputtering. A slide cover glass as used in microscopy is simultaneously coated in the same manner. In this test set-up, both substrates are placed 2 cm from the excitation electrodes. The layer thickness of the polymer film on the cover glass is determined indirectly by the QCM frequency change in the identically coated crystal. The measurements are calibrated by the Tolansky method. The contact angles are likewise measured by the air bubble method.

| Energy [W] | Pressure [Pa] | Time [min] | Thickness [nm] | a [°] | r [°] |
|---|---|---|---|---|---|
| 100 | 20 | 6 | 60 | 85 | 115 |

Example 4: The substrates coated as described in Example 3 are coated in a second laboratory apparatus with a further plasma polymer. This is done by producing a direct current discharge between wire mesh electrodes. A 1:1 mixture of 60 % aqueous hydrogen peroxide and ethanol is used to produce the working gas. The test parameters and the effects obtained are set out below.

| Vlt [V] | CI [mA] | Press. [Pa] | Flow [cm³] | Time [min] | AT [nm] | a [°] | r [°] |
|---|---|---|---|---|---|---|---|
| 600 | 5 | 12 | 8 | 12 | 30 | 9 | 12 |
| Vlt = voltage, CI = current intensity, Flow = rate of flow of the working gas in cm³/min(STP), AT = additional layer thickness of the substrates (quartz crystal and cover glass). | | | | | | | |

Example 5: The test set-up is identical with that of Example 4, but using a 1:1 mixture of water/ethanol as working gas:

| Vlt [V] | CI [mA] | Press. [Pa] | Flow [cm³] | Time [min] | A.T. [nm] | a [°] | r [°] |
|---|---|---|---|---|---|---|---|
| 600 | 5 | 12 | 8 | 12 | 40 | 22 | 50 |

The coating thicknesses for Examples 4 and 5 are comparable and sufficient, but the plasma polymer coating carried out with hydrogen peroxide shows a much better wettability of the surface. The thinner layer thickness of Example 4 compared with that of Example 5 can be explained by the sharply increased oxygen concentration in the working plasma during coating.

Example 6: The same test set-up is used as in Example 4 for coating a quartz crystal and a cover glass. The plasma is produced by applying a d.c. current of 40 kHz and 5 W to the wire mesh electrodes. n-Hexane is used as working gas. (A is the power in watts).

| A [W] | Press. [Pa] | Flow [cm³] | Time [min] | AT [nm] | a [°] | r [°] |
|---|---|---|---|---|---|---|
| 5 | 30 | 15 | 5 | 120 | 65 | 80 |

Example 7: The substrates coated in Example 6 are subjected to an additional second plasma polymerisation with a second working gas, viz. a 1:1 mixture of water/ethanol. The apparatus of Example 6 is used.

| A [W] | Press. [Pa] | Flow [cm³] | Time [min] | AT [nm] | a [°] | r [°] |
|---|---|---|---|---|---|---|
| 5 | 14 | 12 | 10 | 30 | 20 | 32 |

Example 8: The substrates coated in Example 6 are subjected to an additional second plasma polymerisation with a second working gas. A 1:1 mixture of 70 % aqueous hydrogen peroxide and ethanol is used to produce the working gas. The apparatus of Example 6 is used.

| A [W] | Press. [Pa] | Flow [cm³] | Time [min] | AT [nm] | a [°] | r [°] |
|---|---|---|---|---|---|---|
| 5 | 14 | 12 | 10 | 12 | 10 | 22 |

The hydrocarbon polymer is produced with n-hexane, Examples 6 to 8, shows a perceptible enhancement of wettability after carrying out an aftertreatment according to Example 7 or, in particular, to Example 8 with hydrogen peroxide/ethanol (cf. contact angle). The diminished increase in layer thickness in Example 8 compared with Example 7 is attributable to a stronger ablation caused by the higher oxygen content.

### Example 9 (Ageing and abrasion resistance)

Teflon AF substrates 1 mm thick and 1 cm in diameter are first coated with a plasma polymer as in Example 1. A 1: 1 mixture of 60 % aqueous hydrogen peroxide and ethanol is used to produce the working gas. To determine the ageing resistance of the plasma polymer, the contact angles of the coated substrates are measured as a function of the time. The substrates are kept in distilled water for the entire duration of the experiment. Before measuring the contact angle, the substrates - as is usual for contact lenses - are cleansed (washed) with a commercial cleansing solution (LC, 65N, Allergan), namely by rubbing the substrates in the cleansing solution between thumb and forefinger. Afterwards the substrates are rinsed with distilled water. The contact angle is then measured by the air bubble method.

| Time | Advancing angle [°] | | Receding angle [°] | |
|---|---|---|---|---|
| h | before washing | after | before washing | after |
| 0 | 11 | | 23 | |
| 275 | 10 | 8 | 17 | 14 |
| 299 | 11 | | 11 | |
| 300 | | 14 | | 31 |
| 586 | 8 | 8 | 15 | 41 |
| 778 | 12 | 12 | 24 | 31 |
| 813 | 11 | 16 | 16 | 61 |

These results show that the advancing angle, despite increasing time, remains approximately constant and small. This means that the plasma polymer film is resistant to ageing and has excellent wettability.

## Claims

1. A process for coating a polymer substrate with a hydrophilic film, comprising the steps of producing a working gas comprising at least one organic compound in a plasma reactor, converting said working gas into a plasma form and subjecting the polymer substrate to said plasma, which working gas further comprises hydrogen peroxide in addition to at least one organic compound.

2. A process according to claim 1, wherein the hydrogen peroxide used in the production of the working gas has a concentration of 50 to 90% by weight in water.

3. A process according to claim 1, wherein the amount of organic compound in the working gas is in the range from 5 to 90% by weight.

4. A process according to claim 1, wherein the organic compound has a vapour pressure of at least 10 Pa at 20°C.

5. A process according to claim 1, wherein the organic compound is an aliphatic, alicyclic, araliphatic hydrocarbon or oxahydrocarbon or an aromatic compound, each of which is unsubstituted or substituted by hydroxy, amino, formyl or carboxyl and contains up to 12 carbon atoms inclusive.

6. A process according to claim 1, wherein the organic compound is an alkane, oxaalkane, alkene, oxaalkene, alkyne, oxaalkyne, mono-, bi- or tricycloalkane, mono-, bi- or tricyclooxaalkane or an aromatic hydrocarbon, each of which is unsubstituted or substituted by hydroxy, amino, formyl or carboxyl and contains up to 12 carbon atoms inclusive.

7. A process according to claim 1, wherein the organic compound is a lower alkane, lower oxaalkane, lower alkene, lower oxaalkene, lower alkyne, lower oxaalkyne or cycloalkane, each of which is unsubstituted or substituted by hydroxy, amino, formyl or carboxyl and contains 3 to 8 carbon atoms, or an oxacycloalkane which is unsubstituted or substituted by hydroxy, amino, formyl or carboxyl and contains 2 to 8 carbon atoms, or is unsubstituted phenyl or phenyl which is substituted by hydroxy, amino, formyl, carboxyl or C₁-C₄alkyl.

8. A process according to claim 1, wherein the organic compound is an alkane, alkanol or cycloalkanol containing up to 8 carbon atoms inclusive.

9. A process according to claim 1, wherein the hydrogen peroxide used in the production of the working gas has a concentration of 50 to 90 % by weight and the organic compound is a lower alkanol containing up to 8 carbon atoms inclusive.

10. A process according to claim 1, wherein the hydrogen peroxide used to produce the working gas has a concentration of 50 to 90 % by weight and the organic compound is a lower alkane containing up to 8 carbon atoms inclusive.

11. A process according to claim 1, wherein the hydrophilic film has a thickness of 10 to 800 nm.

12. A process according to claim 1, wherein the working gas additionally comprises a noble gas.

13. A process according to claim 12, wherein the noble gas is argon.

14. A process according to claim 1, wherein the working gas additionally comprises an inorganic gas or an inorganic gas mixture.

15. A process according to claim 14, wherein the inorganic gas is air.

16. A process according to claim 1, wherein the polymer substrate is an ophthalmologically acceptable product.

17. A process according to claim 1, wherein the polymer substrate is a contact lens.

18. A process according to claim 1, wherein the polymer substrate consists of amorphous teflon.

19. A contact lens which is produced by a process as claimed in claim 17.

## Patentansprüche

1. Verfahren zur Beschichtung eines Polymersubstrats mit einem hydrophilen Film, umfassend die Schritte Herstellen eines Arbeitsgases, umfassend mindestens eine organische Verbindung in einem Plasmareaktor, Umwandeln des Arbeitsgases zu einer Plasma form und Unterziehen des Polymersubstrats dem Plasma, wobei das Arbeitsgas weiterhin Wasserstoffperoxid zusätzlich zu mindestens einer organischen Verbindung umfaßt.

2. Verfahren nach Anspruch 1, wobei das bei der Herstellung des Arbeitsgases verwendete Wasserstoffperoxid in Wasser eine Konzentration von 50 bis 90 Gewichtsprozent aufweist.

3. Verfahren nach Anspruch 1, wobei die Menge an organischer Verbindung in dem Arbeitsgas im Bereich von 5 bis 90 Gewichtsprozent vorliegt.

4. Verfahren nach Anspruch 1, wobei die organische Verbindung einen Dampfdruck von mindestens 10 Pa bei 20°C aufweist.

5. Verfahren nach Anspruch 1, wobei die organische Verbindung eine aliphatische, alicyclische, araliphatische Kohlenwasserstoff- oder Oxakohlenwasserstoff- oder eine aromatische Verbindung darstellt, wobei jede davon unsubstituiert oder mit Hydroxy, Amino, Formyl oder Carboxyl substituiert ist und bis zu einschließlich 12 Kohlenstoffatome enthält.

6. Verfahren nach Anspruch 1, wobei die organische Verbindung ein Alkan, Oxaalkan, Alken, Oxaalken, Alkin, Oxaalkin, Mono-, Bi- oder Tricycloalkan, Mono-, Bi- oder Tricyclooxaalkan oder einen aromatischen Kohlenwasserstoff darstellt, wobei jeder davon unsubstituiert oder mit Hydroxy, Amino, Formyl oder Carboxyl substituiert ist und bis zu einschließlich 12 Kohlenstoffatome enthält.

7. Verfahren nach Anspruch 1, wobei die organische Verbindung ein Niederalkan, Niederoxaalkan, Niederalken, Niederoxaalken, Niederalkin, Niederoxaalkin oder Cycloalkan darstellt, wobei jedes davon unsubstituiert oder mit Hydroxy, Amino, Formyl oder Carboxyl substituiert ist und 3 bis 8 Kohlenstoffatome enthält, oder ein Oxacycloalkan darstellt, das unsubstituiert oder mit Hydroxy, Amino, Formyl oder Carboxyl substituiert ist und 2 bis 8 Kohlenstoffatome enthält, oder eine unsubstituierte Phenylgruppe oder eine Phenylgruppe, die mit Hydroxy, Amino, Formyl, Carboxyl oder C₁-C₄-Alkyl substituiert ist, darstellt.

8. Verfahren nach Anspruch 1, wobei die organische Verbindung ein Alkan, Alkanol oder Cycloalkanol, das bis zu einschließlich 8 Kohlenstoffatome enthält, darstellt.

9. Verfahren nach Anspruch 1, wobei das bei der Herstellung des Arbeitsgases verwendete Wasserstoffperoxid eine Konzentration von 50 bis 90 Gewichtsprozent aufweist und die organische Verbindung ein Niederalkanol, das bis zu einschließlich 8 Kohlenstoffatome enthält, darstellt.

10. Verfahren nach Anspruch 1, wobei das zur Herstellung des Arbeitsgases verdendete Wasserstoffperoxid eine Konzentration von 50 bis 90 Gewichtsprozent aufweist und die organische Verbindung ein Niederalkan, das bis zu einschließlich 8 Kohlenstoffatome enthält, darstellt.

11. Verfahren nach Anspruch 1, wobei der hydrophile Film eine Dicke von 10 bis 800 nm aufweist.

12. Verfahren nach Anspruch 1, wobei das Arbeitsgas zusätzlich ein Edelgas umfaßt.

13. Verfahren nach Anspruch 12, wobei das Edelgas Argon darstellt.

14. Verfahren nach Anspruch 1, wobei das Arbeitsgas zusätzlich ein anorganisches Gas oder ein anorganisches Gasgemisch umfaßt.

15. Verfahren nach Anspruch 14, wobei das anorganische Gas Luft ist.

16. Verfahren nach Anspruch 1, wobei das Polymersubstrat ein ophthalmologisch verträgliches Produkt darstellt.

17. Verfahren nach Anspruch 1, wobei das Polymersubstrat eine Kontaktlinse darstellt.

18. Verfahren nach Anspruch 1, wobei das Polymersubstrat aus amorphem Teflon besteht.

19. Kontaktlinse, die durch ein Verfahren nach Anspruch 17 hergestellt ist.

## Revendications

1. Un procédé d'enrobage d'un substrat polymère avec un film hydrophile, caractérisé en ce qu'il comprend les étapes de production d'un gaz de travail comprenant au moins un composé organique dans un réacteur à plasma, la transformation dudit gaz de travail sous forme de plasma et la soumission du substrat polymère audit plasma, ce gaz de travail comprend également du peroxyde d'hydrogène en plus d'au moins un composé organique.

2. Un procédé selon la revendication 1, caractérisé en ce que le peroxyde d'hydrogène utilisé dans la production du gaz de travail a une concentration de 50 à 90% en poids dans l'eau.

3. Un procédé selon la revendication 1, caractérisé en ce que la quantité de composé organique dans le gaz de travail est compris entre 5 et 90% en poids.

4. Un procédé selon la revendication 1, caractérisé en ce que le composé organique a une pression de vapeur d'au moins 10 Pa à 20°C.

5. Un procédé selon la revendication 1, caractérisé en ce que le composé organique est un hydrocarbure ou un oxahydrocarbure aliphatiques, alicycliques, araliphatiques ou un composé aromatique, chacun d'entre eux est non substitué ou substitué par un groupe hydroxy, amino, formyle ou carboxy et contient jusqu'à 12 atomes de carbone inclus.

6. Un procédé selon la revendication 1, caractérisé en ce que le composé organique est un alcane, un oxaalcane, un alcène, un oxaalcène, un alcyne, un oxaalcyne, un mono-, bi- ou tricycloalcane, un mono-, bi- ou tricyclooxaalcane ou un hydrocarbure aromatique, chacun d'entre eux est non substitué ou substitué par un groupe hydroxy, amino, formyle ou carboxy et contient jusqu'à 12 atomes de carbone inclus.

7. Un procédé selon la revendication 1, caractérisé en ce que le composé organique est un alcane inférieur, un oxaalcane inférieur, un alcène inférieur, un oxaalcène inférieur, un alcyne inférieur, un oxaalcyne inférieur ou un cycloalcane, chacun d'entre eux est non substitué ou substitué par un groupe hydroxy, amino, formyle ou carboxy et contient de 3 à 8 atomes de carbone, ou un oxacycloalcane qui est non substitué ou substitué par un groupe hydroxy, amino, formyle ou carboxy et contient de 2 à 8 atomes de carbone, ou est un groupe phényle non substitué ou phényle qui est substitué par un groupe hydroxy, amino, formyle, carboxy ou C₁-C₄alkyle.

8. Un procédé selon la revendication 1, caractérisé en ce que le composé organique est un alcane, un alcanol ou un cycloalcanol contenant jusqu'à 8 atomes ce carbone inclus.

9. Un procédé selon la revendication 1, caractérisé en ce que le peroxyde d'hydrogène utilisé dans la production du gaz de travail a une concentration de 50 à 90% en poids et le composé organique est un alcanol inférieur contenant jusqu'à 8 atomes de carbone inclus.

10. Un procédé selon la revendication 1, caractérisé en ce que le peroxyde d'hydrogène utilisé pour produire le gaz de travail a une concentration de 50 à 90% en poids et le composé organique est un alcane inférieur contenant jusqu'à 8 atomes de carbone inclus.

11. Un procédé selon la revendication 1, caractérisé en ce que le film hydrophile a une épaisseur de 10 à 800 nm.

12. Un procédé selon la revendication 1, caractérisé en ce que le gaz de travail comprend en outre un gaz noble.

13. Un procédé selon la revendication 12, caractérisé en ce que le gaz noble est de l'argon.

14. Un procédé selon la revendication 1, caractérisé en ce que le gaz de travail comprend en outre un gaz minéral ou un mélange de gaz minéraux.

15. Un procédé selon la revendication 14, caractérisé en ce que le gaz minéral est de l'air.

16. Un procédé selon la revendication 1, caractérisé en ce que le substrat polymère est un produit acceptable en ophtalmologie.

17. Un procédé selon la revendication 1, caractérisé en ce que le substrat polymère est une lentille de contact.

18. Un procédé selon la revendication 1, caractérisé en ce que le substrat polymère est composé de téflon amorphe.

19. Une lentille de contact qui est produite selon un procéde tel que revendiqué à la revendication 17.
